# EUROPÄISCHE PATENTANMELDUNG

(11) **EP 1 160 474 A2**
(43) Veröffentlichungstag der Anmeldung: **05.12.2001**
(21) Anmeldenummer: 01111955.9
(22) Anmeldetag: 21.05.2001
(51) Int. Cl.: F16D 48/06

(54) **Betätigungsvorrichtung bzw. Verfahren zur Steuerung einer Betätigungsvorrichtung der Kupplung eines Kraftfahrzeuges**

(30) Priorität: 27.05.2000 DE 10026386
(71) Anmelder: Volkswagen Aktiengesellschaft, 38436 Wolfsburg (DE)
(72) Erfinder: Carl, Frank, 38106 Braunschweig (DE); Christmann, Ralf, 38518 Gifhorn (DE); Hofmann, Rainer, 38106 Braunschweig (DE); Krause, Heinrich, 38477 Jembke (DE); Kruse, Georg, 38518 Gifhorn (DE); Marx, Volker, 29379 Wittingen (DE); Nicke, Dirk, 06849 Dessau (DE); Schamscha, Axel, 38458 Velpke (DE)

(57) **Zusammenfassung**

Die Erfindung betrifft eine Betätigungsvorrichtung (1) bzw. ein Verfahren zur Steuerung der Betätigungsvorrichtung der Kupplung eines Kraftfahrzeuges, mit einem ersten Antrieb (2) zur Steuerung der Öffnungs- und/oder der Schließvorgänge der Kupplung und einem zweiten Antrieb (3) zur zumindest teilweisen Unterstützung des ersten Antriebes (2), wobei der erste Antrieb (2) als Elektromotor (2a) ausgeführt ist und eine Antriebswelle (2b) aufweist und die Antriebswelle (2b) mit einem Stellglied (4) zur Realisierung der Öffnungs- und/oder Schließvorgänge der Kupplung direkt oder indirekt wirksam verbunden ist.

Die Wirkungsweise ist dadurch verbessert, daß der zweite Antrieb (3) so angeordnet und ausgebildet ist, daß der zweite Antrieb (3) zur Unterstützung des von der Antriebswelle (2b) des ersten Antriebes (2) aufzubringenden Drehmomentes direkt auf die Antriebswelle (2b) des ersten Antriebes (2) einwirkt.

## Beschreibung

Die Erfindung betrifft eine Betätigungsvorrichtung zur Betätigung der Kupplung eines Kraftfahrzeuges, mit einem ersten Antrieb zur Steuerung der Öffnungs- und/oder der Schließvorgänge der Kupplung und einem zweiten Antrieb zur Unterstützung des ersten Antriebes, wobei der erste Antrieb als Elektromotor ausgeführt ist und eine Antriebswelle aufweist und die Antriebswelle mit einem Stellglied zur Realisierung der Öffnungs- und/oder Schließvorgänge der Kupplung direkt oder indirekt wirksam verbunden ist. Weiterhin betrifft die Erfindung ein Verfahren zur Steuerung einer Betätigungsvorrichtung zur Betätigung der Kupplung eines Kraftfahrzeuges, wobei mit Hilfe eines ersten Antriebes die Öffnungs- und/oder die Schließvorgänge der Kupplung gesteuert werden und mit Hilfe eines zweiten Antriebes der erste Antrieb unterstützt wird, wobei der erste Antrieb als Elektromotor ausgeführt ist, eine Antriebswelle aufweist und die Antriebswelle mit einem Stellglied zur Realisierung der Öffnungs- und/oder Schließvorgänge der Kupplung direkt oder indirekt wirksam verbunden ist und die Antriebswelle - bei Ansteuerung des ersten Antriebes - aus einer Ruhelage bis zu einem bestimmten Drehmoment hochgefahren wird.

Im Stand der Technik sind als Elektromotoren ausgeführte - erste - als Komponenten von Betätigungsvorrichtungen zur Betätigung der Kupplung eines Kraftfahrzeuges bekannt, die eine entsprechende Antriebswelle aufweisen. Hierbei steht ein Ende der Antriebswelle zumeist über ein Ritzel mit einem weiteren Zahnrad in Eingriff, so daß dann wieder das Stellglied zur Betätigung zumindest einer Kupplungshälfte bewegt bzw. betätigt werden kann. Problematisch bei diesen als Elektromotoren ausgeführten - ersten - Antrieben ist, daß im Anfahrvorgang, also dann, wenn die Kupplung entsprechend zunächst anfänglich angesteuert wird, die Antriebswelle des als Elektromotor ausgeführten - ersten - Antriebes nur "langsam" bis zu ihrer vorbestimmten Drehzahl bzw. bis zu ihrem vorbestimmten Drehmoment, anläuft. Im allgemeinen benötigt der als Elektromotor ausgeführte Antrieb hierzu ca. 120 Millisekunden, wohingegen ca. 40 - 70 Millisekunden, um die Antriebswelle des als Elektromotor ausgeführten - ersten - Antriebes "hochzureißen" gewünscht wären.

Im Stand der Technik ist beispielsweise eine Notbetätigung für eine Betätigungsvorrichtung für eine Kraftfahrzeugkupplung bekannt (DE 197 23 36 A1), die zwei Aktuatoren aufweist. Der erste Aktuator ist elektronisch geregelt und über ein in Richtung der als Reibungskupplung ausgeführten Kraftfahrzeugkupplung verschiebbares Stellglied mit dieser über das Stellglied wirksam verbunden. Weiterhin ist dieser erste Aktuator (1. Antrieb) in Bewegungsrichtung des Stellgliedes wiederum selbst verschiebbar gelagert. Zusätzlich ist sequentiell zum ersten Aktuator (1. Antrieb) ein zweiter Aktuator (2. Antrieb) angeordnet, wobei beide Aktuatoren entsprechend so wirksam miteinander verbunden sind, daß bei einem Ausfall des ersten Aktuators die Kraftfahrzeugkupplung durch den zweiten Aktuator weiter betreibbar ist. Allerdings ist der zweite Aktuator wesentlich leistungsschwächer ausgeführt als der erste Aktuator.

Weiterhin ist im Stand der Technik eine Betätigungsvorrichtung zur Betätigung der Kupplung eines Kraftfahrzeuges bekannt (DE 196 27 980 A1), die zwei Antriebe zur Steuerung der Öffnungs- und/oder der Schließvorgänge der Kupplung aufweist. Der erste Antrieb ist als Elektromotor ausgeführt und weist eine Antriebswelle auf, die über Zwischenelemente, insbesondere über ein Schneckengetriebe, d.h. über eine Schnecke und einem Schneckenzahnrad und einer vorgesehenen Kurvenscheibe auf ein Stellglied, hier einen Gangsteller einwirkt. Zur Unterstützung des ersten Antriebes, also des Elektromotors, ist ein zweiter Antrieb vorgesehen, der als Kraftspeicher ausgeführt ist und ein Federelement, insbesondere eine Spiral- oder Schenkelfeder aufweist. Die Spiralfeder bzw. Schenkelfeder ist in einem hierfür vorgesehenen Gehäuse entsprechend gelagert und wirkt zur Unterstützung des ersten Antriebes mit einem Stößel zusammen, dessen vorderes Ende mit dem Kurvenprofil der Kurvenscheibe zusammenwirkt und somit zumindest über einen Teilbereich den ersten Antrieb, nämlich den Elektromotor unterstützt.

Die im Stand der Technik bekannte Betätigungsvorrichtung, von der die Erfindung ausgeht (DE 196 27 980 A1), ist einerseits konstruktionsmäßig aufwendig und daher nur teuer herstellbar, andererseits vom Steuerungsaufwand teilweise kompliziert. Einerseits ist der erste Antrieb über Zwischenelemente "Schnecke, Schneckenrad, Kurvenscheibe" mit einem Stellglied zur Betätigung der Kupplung und/oder eines Gangstellers wirksam verbunden, andererseits wirkt dann der zweite Antrieb - zur Unterstützung des ersten Antriebes - über die "Zwischenelemente" auf den ersten Antrieb und zusätzlich noch über den durch die Spiralfeder angetriebenen Stößel auf das Kurvenprofil der Kurvenscheibe. Weiterhin ist die Steuerung dieses als Kraftspeicher ausgeführten zweiten Antriebes problematisch, da hier das Federelement, also vorzugsweise die Spiralfeder bei häufigen Gebrauch einem "Verschleiß" unterliegt und die hierdurch bedingte Kraftbeaufschlagung der Zwischenelemente, im Laufe ausgeprägter Nutzung ungleichmäßig ist.

Die im Stand der Technik bekannten Betätigungsvorrichtungen sind daher noch nicht optimal ausgebildet, einerseits ist die eine - schnelle - Aufbringung des Anfangsdrehmomentes bzw. der Anfangsdrehzahl, d.h. die schnelle Erzielung der gewünschten Drehzahl bzw. des gewünschten Drehmomentes der Antriebswelle der als Elektromotor ausgeführten ersten Antriebes problematisch, andererseits ist der konstruktive Aufwand, die damit verbundenen Kosten sowie die Steuerung des im Stand der Technik bekannten zweiten Antriebes (Kraftspeicher mit Federelement) zur Unterstützung des ersten Antriebes auch noch nicht optimal.

Der Erfindung liegt daher die Aufgabe zugrunde, die eingangs genannte Betätigungsvorrichtung bzw. das eingangs genannte Verfahren derart auszugestalten und weiterzubilden, daß einerseits der konstruktive Aufwand und die damit verbundenen Kosten verringert sind, andererseits eine einfache Steuerung zur Realisierung des gewünschten Anfangsdrehmomentes für die erste Antriebswelle des ersten Antriebes erreicht ist.

Für die eingangs genannte Betätigungsvorrichtung ist dies nun dadurch gelöst, daß der zweite Antrieb so angeordnet und ausgebildet ist, daß der zweite Antrieb zur Unterstützung des von der Antriebswelle des ersten Antriebes aufzubringenden Drehmomentes direkt auf die Antriebswelle des ersten Antriebes einwirkt.

Für das Verfahren ist diese Aufgabe nun dadurch gelöst, daß der zweite Antrieb so angeordnet und ausgebildet ist, daß der zweite Antrieb direkt auf die Antriebswelle des ersten Antriebes einwirkt und der zweite Antrieb zur Unterstützung des von der Antriebswelle des ersten Antriebes - während des Hochfahrens - aufzubringenden Drehmomentes zur Erzielung eines bestimmten Anfangsdrehmomentes zugeschaltet wird.

Durch die erfindungsgemäße Ausgestaltung der Betätigungsvorrichtung bzw. des Verfahrens zur Steuerung der Betätigungsvorrichtung werden die eingangs beschriebenen Nachteile vermieden. Zunächst wirkt der zweite Antrieb nun direkt auf die Antriebswelle des als Elektromotor ausgeführten ersten Antriebs. Dies hat zur Folge, daß die eingangs erwähnten Zwischenelemente - wie bisher im Stand der Technik üblich - wie "Schnecke, Schneckenrad, Kurvenscheibe" etc. entfallen. Der konstruktive Aufwand ist erheblich vermindert. Da der zweite Antrieb nunmehr direkt auf die Antriebswelle des ersten Antriebs einwirkt, entfallen auch die Kraftübertragungswege, so wie die Steuerung der Betätigungsvorrichtung hierdurch wesentlich vereinfacht ist, was im folgenden noch deutlich werden wird. Im Ergebnis werden die eingangs beschriebenen Nachteile unter Vermeidung von Kosten vermieden.

Es gibt nun eine Vielzahl von Möglichkeiten, die erfindungsgemäße Betätigungsvorrichtung bzw. das erfindungsgemäße Verfahren in vorteilhafter Weise auszugestalten und weiterzubilden. Hierfür darf zunächst auf die im Patentanspruch 1 sowie den Patentanspruch 12 nachgeordneten Patentansprüche verwiesen werden. Im einzelnen sollen nun zwei bevorzugte Ausführungsbeispiele der Erfindung anhand der folgenden Zeichnung sowie der dazugehörenden Beschreibung näher erläutert werden. Im einzelnen zeigt:
- Fig. 1: ein erstes Ausführungsbeispiel einer Betätigungsvorrichtung in schematischer Darstellung, teilweise geschnitten, nämlich in einer Sicht von oben den ersten - als Elektromotor ausgeführten - Antrieb, wobei der zweite Antrieb hier als Hydromotor ausgeführt ist,
- Fig. 2: den als Hydromotor ausgeführten zweiten Antrieb in einer schematischen Darstellung, teilweise geschnitten, von der Seite,
- Fig. 3: ein zweites Ausführungsbeispiel einer Betätigungsvorrichtung, nämlich für einen zweiten Antrieb, der eine Schwungmasse als Antriebselement aufweist, die mit der Antriebswelle des ersten Antriebes kuppelbar ist, und
- Fig. 4: in einer schematischen Darstellung das Steuersystem zur Realisierung der in Fig. 1 dargestellten Betätigungsvorrichtung mit dem als Hydromotor ausgeführten zweiten Antrieb.

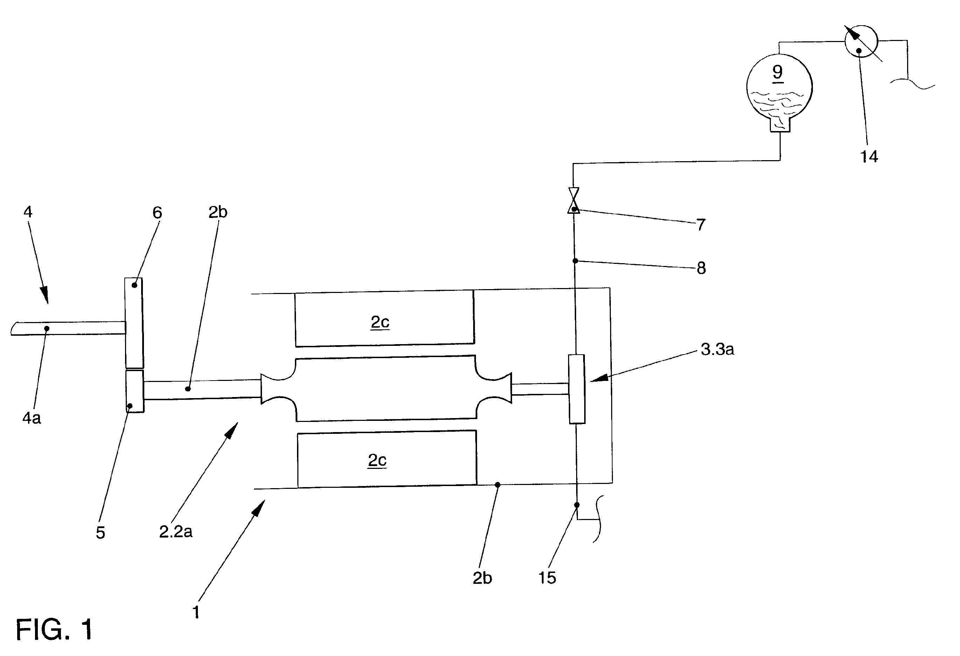

Die Fig. 1 bis 4 zeigen - zumindest teilweise - die Betätigungsvorrichtung 1 zur Betätigung einer hier nicht dargestellten Kupplung eines nicht dargestellten Kraftfahrzeuges.

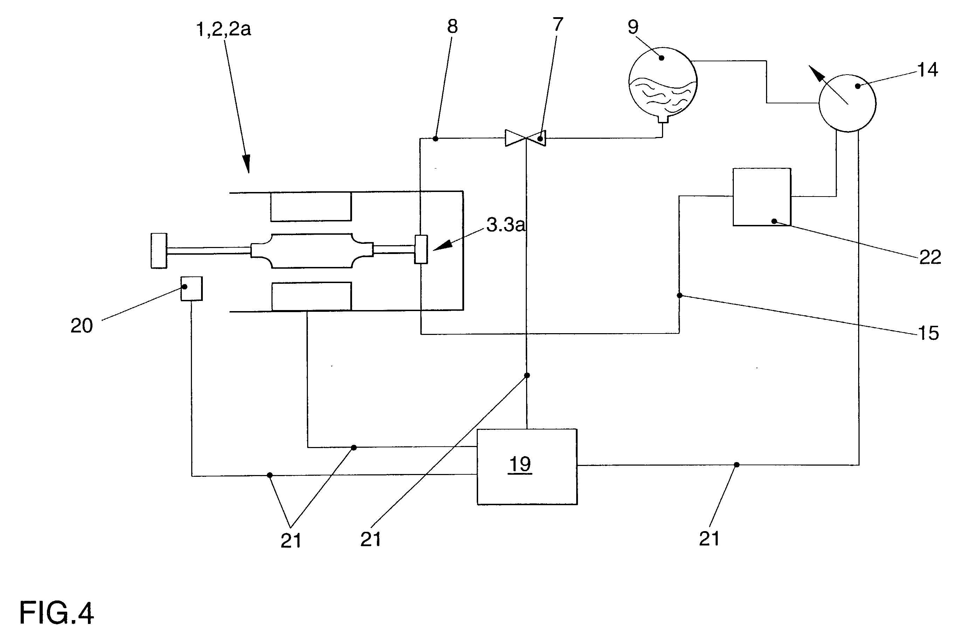

Gut zu erkennen ist in Fig. 1 und in Fig. 4 der erste Antrieb 2 zur Steuerung der Öffnungs- und/oder der Schließvorgänge der Kupplung des Kraftfahrzeuges sowie ein zweiter Antrieb 3 zur zumindest teilweisen Unterstützung des ersten Antriebes 2. Hierbei ist der erste Antrieb 2 als Elektromotor 2a ausgeführt und weist eine Antriebswelle 2b auf. Die Antriebswelle 2b des ersten Antriebes 2 ist mit einem hier nur teilweise dargestellten Stellglied 4 zur Realisierung der Öffnungs- und/oder Schließvorgänge der Kupplung des Kraftfahrzeuges direkt oder indirekt wirksam verbunden. Hier ist die Antriebswelle 2b des ersten Antriebes 2 über ein am Ende der Antriebswelle 2b angeordnetes Ritzel 5 mit einem Zahnrad 6 des Stellgliedes 4 verbunden, d.h. über das Ritzel 5 wird das Zahnrad 6 und damit die Stellwelle 4a des Stellgliedes 4 angetrieben. Weiterhin zu erkennen sind die üblichen Komponenten eines als Elektromotor 2a ausgeführten ersten Antriebes 2, nämlich Magnete 2c sowie ein Gehäuse 2d.

Die eingangs beschriebenen Nachteile werden nun dadurch vermieden, daß der zweite Antrieb 3 so angeordnet und ausgebildet ist, daß der zweite Antrieb 3 zur Unterstützung des von der Antriebswelle 2b des ersten Antriebes 2 aufzubringenden Drehmomentes direkt auf die Antriebswelle 2b des ersten Antriebes 2 einwirkt. Die Anordnung des zweiten Antriebes 3 ist in Fig. 1 ersichtlich. Der zweite Antrieb 3 ist nämlich am anderen Ende der Antriebswelle 2b wirksam angeordnet bzw. steht hier wirksam mit diesem Ende der Antriebswelle 2b in Verbindung, was im folgenden noch deutlich werden wird. Hierdurch sind sehr konstruktive einfache Ausgestaltungen der gesamten Betätigungsvorrichtung 1 sowie eine besonders einfache Steuerung der Betätigungsvorrichtung 1 gegeben.

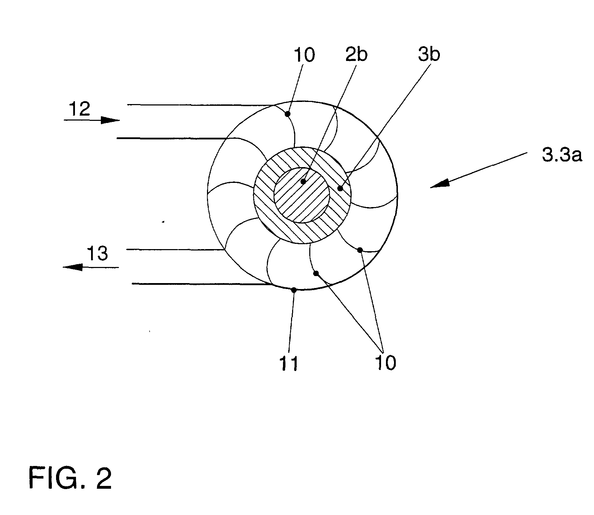

Die Fig. 1 und 2 zeigen einen zweiten Antrieb 3, der hier als Hydromotor 3a ausgeführt ist. Der Hydromotor 3a ist über eine ein Steuerventil 7 aufweisende Hydraulikleitung 8 mit einem Hydraulik-Druckspeicher 9 verbunden. Der Hydromotor 3a weist, wie aus Fig. 2 ersichtlich ist, ein Antriebselement 3b auf, das mit dem in Fig. 1 erkennbaren rechten Ende der Antriebswelle 2b des ersten Antriebes 2 wirksam verbunden ist, nämlich auf dem Ende der Antriebswelle 2b entsprechend fixiert angeordnet ist. Des weiteren weist das Antriebselement 3b des Hydromotors 3a Leitschaufeln 10 und ein Gehäuse 11 auf. Das Antriebselement 3b ist innerhalb des Gehäuses 11 bewegbar angeordnet. Das Gehäuse 11 weist eine Hydraulikmittel-Zuführöffnung 12 und eine Hydraulikmittel-Abführöffnung 13 auf. Weiterhin ist - wie Fig. 4 zeigt - der Hydraulik-Druckspeicher 9 mit einer Druckpumpe 14 strömungsverbunden.

Aus Fig. 1 und 2 wird deutlich, daß die Betätigungsvorrichtung 1, bestehend aus dem ersten Antrieb 2 und dem zweiten Antrieb 3, der hier als Hydromotor 3a ausgeführt ist, derart angetrieben werden kann, daß die Antriebswelle 2b des Elektromotors 2a zusätzlich unterstützt wird durch den zweiten Antrieb 3, nämlich den Hydromotor 3a. Hierfür wird über die Hydraulikmittel-Zuführöffnung 12 und die Hydraulikleitung 8, nämlich wenn das Steuerventil 7 geöffnet wird, Hydraulikmittel dem Hydromotor 3a zugeführt. Das Hydraulikmittel strömt über die Hydraulikmittel-Zuführöffnung 12 in das Gehäuse 11 ein, wo es auf die Leitschaufeln 10 einwirkt. Über den entsprechenden Druck des Hydraulikmittels und die Leitschaufeln 10 wird eine Drehbewegung über das Antriebselement 3b auf die Antriebswelle 2b übertragen, wobei das Hydraulikmittel über die Hydraulikmittel-Abführöffnung 13 das Gehäuse 11 des Hydromotors 3a und die entsprechende Hydraulikleitung 15 abströmen kann.

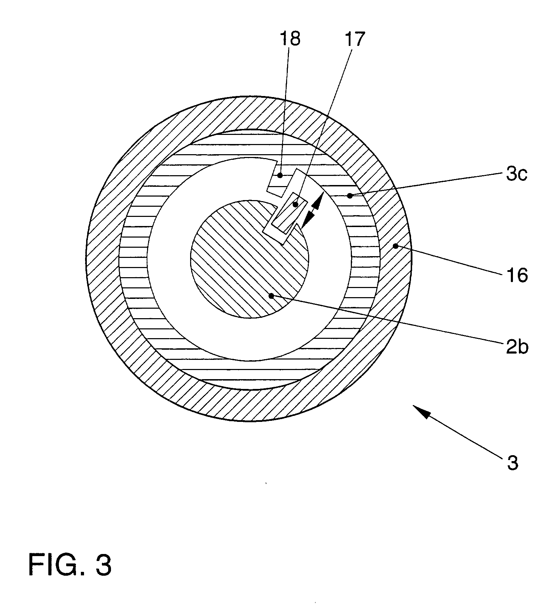

Fig. 3 zeigt nun eine weitere mögliche Ausführungsform für einen zweiten Antrieb 3, nämlich einen zweiten Antrieb 3, der als Antriebselement eine Schwungmasse 3c aufweist. Wie Fig. 3 zeigt, ist die Schwungmasse 3c an einem Ende der Antriebswelle 2b des ersten Antriebes 2 ankuppelbar. Hierzu ist zunächst die Schwungmasse 3c als ringförmiges Element ausgebildet und in einem ringförmigen Gehäuse 16 drehbar gelagert. Es gibt nun unterschiedliche Möglichkeiten, eine Drehbewegung der Schwungmasse 3c zu realisieren. Denkbar sind hier entsprechende Antriebsmittel zur Realisierung der Drehbewegung der Schwungmasse 3c, beispielsweise separate Antriebe, Zahnriemen/oder Zahnradantriebe, wie auch elektromotorisch/magnetisch basierende Antriebe zur Realisierung einer Drehbewegung der Schwungmasse 3c. Dies ist abhängig von den jeweiligen Gegebenheiten.

In diesem Fall kann mit Hilfe eines Kupplungselementes 17 die Schwungmasse 3c mit der Antriebswelle 2b des zweiten Antriebes 2 verkuppelt bzw. von der Antriebswelle 2b entkuppelt werden. Hierzu ist das Kupplungselement 17 innerhalb der Antriebswelle 2b bewegbar gelagert, nämlich radial nach innen bzw. nach außen verschiebbar. Es ist denkbar, daß über eine entsprechende hydraulische Steuerung das Kupplungselement 17 radial nach außen verschiebbar ist. In diesem Fall kann das Kupplungselement 17 mit einem Stutzen 18, der radial nach innen ragend auf der Schwungmasse 3c angeordnet ist, in Kontakt treten. Folglich wird eine Drehbewegung der Schwungmasse 3c über das Kupplungselement 17 auf die Antriebswelle 2b entsprechend übertragen. Zur Steuerung des ersten und zweiten Antriebes 2 und 3 ist nun ein Steuergerät 19 vorgesehen.

Das entsprechende Verfahren zur Steuerung der Betätigungsvorrichtung 1 soll anhand der Fig. 4 nun näher beschrieben werden. Fig. 4 zeigt in schematischer Darstellung das Schaltungsschema, also das Steuersystem zur Steuerung der Betätigungsvorrichtung 1. Gut zu erkennen ist der erste Antrieb 2, also der Elektromotor 2a, der zweite Antrieb 3, hier der Hydromotor 3a, sowie das Steuerventil 7, der Hydraulikmittel-Druckspeicher 9, die Druckpumpe 14, das Steuergerät 19 und ein Drehzahlsensor 20. Alle oben erwähnten Komponenten sind über Steuerleitungen 21 entsprechend mit dem Steuergerät 19 schaltungstechnisch verbunden. Es ist nun möglich, das Steuergerät 19 auf elektronischer/elektrischer Basis zu realisieren. Dies liegt im Ermessen der jeweiligen Anwendung.

Mit Hilfe des Steuergerätes 19 werden nun die Öffnungs- und/oder die Schließvorgänge der hier nicht dargestellten Kupplung des Kraftfahrzeuges gesteuert. Zunächst ist für diese Öffnungs- und/oder die Schließvorgänge der Kupplung der erste Antrieb 2 vorgesehen. Der zweite Antrieb 3 dient zur Unterstützung des ersten Antriebes 2, nämlich zur Realisierung der bestimmten Drehzahl bzw. eines bestimmten Drehmomentes, wenn die Antriebswelle 2b des ersten Antriebes 2 aus dem Ruhezustand hochgefahren wird. Hierdurch sind relativ geringe Schließ- bzw. Öffnungszeiten zur Steuerung der Kupplung möglich. Anders ausgedrückt, bei Beginn, der Betätigung der Betätigungsvorrichtung 1, also bei der Einleitung eines Öffnungsvorganges oder eines Schließvorganges werden beide Antriebe, nämlich der erste Antrieb 2 und der zweite Antrieb 3 entsprechend geschaltet, insbesondere der zweite Antrieb 3 dem ersten Antrieb 2 zugeschaltet. Hierfür wird ein entsprechendes Signal vom Steuergerät 19 an das Steuerventil 7 abgegeben, das öffnet, wodurch über die Hydraulikleitung 8 unter großem Druck stehendes Hydraulikmittel zum Hydromotor 3a strömt, diesen betätigt und über das Antriebselement 3b das entsprechende Drehmoment auf die Antriebswelle 2b übertragen wird. Das hier in Fig. 4 dargestellte Steuersystem ist auf hydraulischer Basis realisiert. Das Hydraulikmittel strömt vom Hydromotor 3a über die Hydraulikleitung 15 zum Hydraulikmittelspeicher 22 und von dort zur Druckpumpe 14. In dem Falle, wenn der zweite Antrieb 3 als "Schwungmassen-Antrieb" realisiert ist, kann das Steuersystem auch auf anderer Basis realisiert werden. Dies ist abhängig von der Art und Weise der Aufbringung des entsprechenden Drehmomentes auf die Schwungmasse 3c. Entscheidend ist dann im Fall der Schwungmasse 3c, daß mit Hilfe des Steuergerätes 19 dann auch das Kupplungselement 17 ansteuerbar ist, damit eine entsprechende Kupplung der Schwungmasse 3c mit der Antriebswelle 2b erfolgen kann.

Weiterhin weist das Steuersystem mindestens einen Drehzahlsensor 20 zur Ermittlung der Drehzahl der Antriebswelle 2b des ersten Antriebes 2 auf. Folglich kann der zweite Antrieb 3 ausgeschaltet werden, wenn die Antriebswelle 2b eine bestimmte Drehzahl bzw. ein bestimmtes Drehmoment erreicht hat, so daß die weitere Schließ- bzw. Öffnungsphase der Kupplung durch den Feinregelbereich des als Elektromotor 2a ausgeführten ersten Antriebes 2 steuerbar ist.

Durch die erfindungsgemäße Ausgestaltung der Betätigungsvorrichtung 1 bzw. des Verfahrens zur Steuerung dieser Betätigungsvorrichtung 1 können die eingangs beschriebenen Nachteile vermieden werden. Von besonderem Vorteil ist, daß beispielsweise das Hydraulik-System des Kraftfahrzeuges zur Realisierung des Antriebs des Hydromotors 3a mit herangezogen werden kann. Es sind folglich also keine weiteren zusätzlichen Komponenten notwendig, die separat zusätzlich installiert werden müssen, um die erfindungsgemäße Betätigungsvorrichtung 1 bzw. das erfindungsgemäße Verfahren zu realisieren. Dies vermeidet bzw. verringert entsprechende Kosten.

### BEZUGSZEICHENLISTE

- 1: Betätigungsvorrichtung
- 2: erster Antrieb
- 2a: Elektromotor
- 2b: Antriebswelle
- 2c: Magnete
- 2d: Gehäuse
- 3: zweiter Antrieb
- 3a: Hydromotor
- 3b: Antriebselement
- 3c: Schwungmasse
- 4: Stellglied
- 4a: Stellwelle
- 5: Ritzel
- 6: Zahnrad
- 7: Steuerventil
- 8: Hydraulikleitung
- 9: Hydraulik-Druckspeicher
- 10: Leitschaufeln
- 11: Gehäuse
- 12: Hydraulikmittel-Zuführöffnung
- 13: Hydraulikmittel-Abführöffnung
- 14: Druckpumpe
- 15: Hydraulikleitung
- 16: ringförmiges Gehäuse
- 17: Kupplungselement
- 18: Stutzen
- 19: Steuergerät
- 20: Drehzahlsensor
- 21: Steuerleitungen
- 22: Hydraulikmittelspeicher

## Patentansprüche

1. Betätigungsvorrichtung (1) zur Betätigung der Kupplung eines Kraftfahrzeuges, mit einem ersten Antrieb (2) zur Steuerung der Öffnungs- und/oder der Schließvorgänge der Kupplung und einem zweiten Antrieb (3) zur zumindest teilweisen Unterstützung des ersten Antriebes (2), wobei der erste Antrieb (2) als Elektromotor (2a) ausgeführt ist und eine Antriebswelle (2b) aufweist und die Antriebswelle (2b) mit einem Stellglied (4) zur Realisierung der Öffnungs- und/oder Schließvorgänge der Kupplung direkt oder indirekt wirksam verbunden ist, **dadurch gekennzeichnet, daß** der zweite Antrieb (3) so angeordnet und ausgebildet ist, daß der zweite Antrieb (3) zur Unterstützung des von der Antriebswelle (2b) des ersten Antriebes (2) aufzubringenden Drehmomentes direkt auf die Antriebswelle (2b) des ersten Antriebes (2) einwirkt.

2. Betätigungsvorrichtung nach Anspruch 1, **dadurch gekennzeichnet, daß** an einem Ende der Antriebswelle (2b) ein Ritzel (5) angeordnet ist und das Ritzel (5) zur Betätigung des Stellgliedes (4) mit einem Zahnrad (6) in Eingriff steht.

3. Betätigungsvorrichtung nach Anspruch 1 oder 2, **dadurch gekennzeichnet, daß** der zweite Antrieb (3) als Hydromotor (3a) ausgeführt ist.

4. Betätigungsvorrichtung nach einem der vorstehenden Ansprüche, **dadurch gekennzeichnet, daß** der Hydromotor (3a) über eine ein Steuerventil (7) aufweisende Hydraulikleitung (8) mit einem Hydraulik-Druckspeicher (9) verbunden ist.

5. Betätigungsvorrichtung nach einem der vorstehenden Ansprüche, **dadurch gekennzeichnet, daß** der Hydromotor (3a) ein Antriebselement (3b) aufweist, das auf dem anderen Ende der Antriebswelle (2b) angeordnet ist.

6. Betätigungsvorrichtung nach einem der vorstehenden Ansprüche, **dadurch gekennzeichnet, daß** der Hydromotor (3a) ein Gehäuse (11) aufweist, innerhalb des Gehäuses (11) das Antriebselement (3b) angeordnet ist und das Gehäuse (11) mindestens eine Hydraulikmittel-Zuführöffnung (12) und eine Hydraulikmittel-Abführöffnung (13) aufweist.

7. Betätigungsvorrichtung nach einem der vorstehenden Ansprüche, **dadurch gekennzeichnet, daß** eine Druckpumpe (14) mit dem Hydraulik-Druckspeicher (9) strömungsverbunden ist.

8. Betätigungsvorrichtung nach einem der vorstehenden Ansprüche, **dadurch gekennzeichnet, daß** der zweite Antrieb (3) als Antriebselement eine Schwungmasse (3c) aufweist und die Schwungmasse (3c) an das andere Ende der Antriebswelle (2b) des ersten Antriebes (2) ankuppelbar ist.

9. Betätigungsvorrichtung nach einem der vorstehenden Ansprüche, **dadurch gekennzeichnet, daß** die Schwungmasse (3c) als ringförmiges Element ausgebildet und in einem ringförmigen Gehäuse (16) drehbar gelagert ist.

10. Betätigungsvorrichtung nach einem der vorstehenden Ansprüche, **dadurch gekennzeichnet, daß** mit Hilfe eines Kupplungselementes (17) die Schwungmasse (3c) mit der Antriebswelle (2b) verkuppelbar und von der Antriebswelle (2b) entkuppelbar ist.

11. Betätigungsvorrichtung nach einem der vorstehenden Ansprüche, **dadurch gekennzeichnet, daß** zur Steuerung des ersten und zweiten Antriebes (2, 3) ein Steuergerät (19) vorgesehen ist.

12. Verfahren zur Steuerung einer Betätigungsvorrichtung (1) zur Betätigung der Kupplung eines Kraftfahrzeuges, insbesondere zur Steuerung einer Betätigungsvorrichtung (1) nach einem der Ansprüche 1 bis 11, wobei mit Hilfe eines ersten Antriebes (2) die Öffnungs- und/oder die Schließvorgänge der Kupplung gesteuert werden und mit Hilfe eines zweiten Antriebes (3) der erste Antrieb (2) unterstützt wird, wobei der erste Antrieb (2) als Elektromotor (2a) ausgeführt ist, eine Antriebswelle (2b) aufweist und die Antriebswelle (2b) mit einem Stellglied (4) zur Realisierung der Öffnungs- und/oder Schließvorgänge der Kupplung direkt oder indirekt wirksam verbunden ist und die Antriebswelle (2b) - bei Ansteuerung des ersten Antriebes (2) - aus einer Ruhelage bis zu einem bestimmten Drehmoment hochgefahren wird, **dadurch gekennzeichnet, daß** der zweite Antrieb (3) so angeordnet und ausgebildet ist, daß der zweite Antrieb (3) direkt auf die Antriebswelle (2b) des ersten Antriebes (2) einwirkt und der zweite Antrieb (3) zur Unterstützung des von der Antriebswelle (2b) des ersten Antriebes (2) - während des Hochfahrens - aufzubringenden Drehmomentes zur Erzielung eines bestimmten Anfangs-Drehmomentes zugeschaltet wird.

13. Verfahren nach Anspruch 13, **dadurch gekennzeichnet, daß** die Steuerung des ersten und zweiten Antriebes (2, 3) mit Hilfe eines Steuergerätes (19) realisiert wird.

14. Verfahren nach Anspruch 12 oder 13, **dadurch gekennzeichnet, daß** der zweite Antrieb (3) als Hydromotor (3a) ausgeführt ist, ein hydraulisches Steuersystem zur Steuerung des zweiten Antriebes (3) vorgesehen ist und zumindest das Steuerventil (7) durch das Steuergerät (19) öffnenbar oder verschließbar ist.

15. Verfahren nach einem der Ansprüche 11 bis 14, **dadurch gekennzeichnet, daß** der zweite Antrieb (3) als Antriebselement eine Schwungmasse (3c) aufweist und die Schwungmasse (3c) über ein ansteuerbares Kupplungselement (17) mit der Antriebswelle (2b) verbindbar ist.

16. Verfahren nach einem der Ansprüche 11 bis 15, **dadurch gekennzeichnet, daß** das Steuersystem mindestens einen Drehzahlsensor (20) zur Ermittlung der Drehzahl der Antriebswelle (2b) des ersten Antriebes (2) aufweist.
